## Europäisches Patentamt
## European Patent Office
## Office européen des brevets

(11) Veröffentlichungsnummer: **0 051 798**
A1

(12) **EUROPÄISCHE PATENTANMELDUNG**

(21) Anmeldenummer: 81109076.0

(22) Anmeldetag: 28.10.81

(51) Int. Cl.³: **C 09 J 3/12, C 09 J 3/14**

(30) Priorität: 06.11.80 DE 3041841

(43) Veröffentlichungstag der Anmeldung: 19.05.82
**Patentblatt 82/20**

(84) Benannte Vertragsstaaten: **AT BE CH DE FR IT LI LU NL SE**

(71) Anmelder: Henkel Kommanditgesellschaft auf Aktien,
Postfach 1100 Henkelstrasse 67,
D-4000 Düsseldorf 1 (DE)

(72) Erfinder: Özelli, Dr., Riza Nur, Stephanusstrasse 37,
D-4040 Neuss 22 (DE)
Erfinder: Kohlstadt, Hans-Peter, Virchowstrasse 16a,
D-5620 Velbert (DE)

(54) Unter Vulkanisationsbedingungen wirksame Bindemittel für Synthese- und Naturkautschuk.

㉗ Unter Vulkanisationsbedingungen wirksame Bindemittel für Natur- und Synthesekautschuk, die als wesentliche Bestandteile einen zusätzlichen Gehalt von N,N′-m-Phenylen-dimaleinimid in einer Menge von 1 bis 15, insbesondere 2 bis 8 Gewichtsprozent aufweisen und noch etwa 2 bis 15 Gewichtsprozent chlorsulfoniertes Polyethylen, 2 bis 10 Gewichtsprozent chlorierten Naturkautschuk, 1 bis 10 Gewichtsprozent Novalak, 2 bis 15 Gewichtsprozent Füllstoff sowie Lösungsmittel (Rest bis 100%) enthalten.

EP 0 051 798 A1

Henkelstraße 67
4000 Düsseldorf, den 4. November 1980

0051798

HENKEL KGaA
ZR-FE/Patente

Dr.SchOe/Ge

Patentanmeldung
D 6265 EP

"Unter Vulkanisationsbedingungen wirksame Bindemittel
für Synthese- und Naturkautschuk"

Gegenstand der vorliegenden Erfindung ist ein Verfahren zum Aufvulkanisieren von Kautschukmischungen auf Metalle oder Unterlagen, die unter den Vulkanisationsbedingungen stabil sind, unter Verwendung von Bindemitteln beziehungsweise Haftvermittlern auf Basis von Mischungen aus Chlor und Schwefel enthaltenden Polymeren sowie die für diese Verfahren verwendeten Bindemittel beziehungsweise Haftvermittler.

Haftvermittler beziehungsweise Bindemittel auf Basis von Polyisocyanaten, die auch Anlagerungsprodukte von Triglycidylisocyanurat an die Isocyanate im Molverhältnis 1 : 3 enthalten können, zur Herstellung von Verbundkörpern durch Aufvulkanisieren von Kautschukmischungen auf Metalle oder andere stabile Substrate sind bekannt. Weiterhin ist es bekannt, chlorsulfoniertes Polyethylen zusammen mit Polyisocyanaten als Bindemittel für Elastomere zu verwenden. Diese Bindemittel können auch weitere chlorierte Polymere enthalten. Auch ist die Verwendung von Phenolharzen oder Epoxidharzen zusammen mit Härtungsmitteln für dieselben zum Kleben beziehungsweise Verbinden von Metallen mit Kautschuk bekannt. Derartige bekannte Klebmischungen genügen jedoch den Anforderungen der Technik häufig nicht in allen Punkten .

. . .

0051798

Aufgabe der vorliegenden Erfindung war es, einen Haftvermittler zur Herstellung von Verbundkörpern durch Aufvulkanisieren von Kautschukmischungen auf Metalle oder
andere stabile Substrate zu finden, der die geschilderten
Nachteile nicht aufweist. Insbesondere sollen die Haftvermittler bei guter Haltbarkeit ohne Verwendung eines
Primers zu Bindungen zwischen dem Kautschuk und den
Unterlagen führen, die auch starken Beanspruchungen gewachsen sind. Schließlich sollte der neue Haftvermittler
frei sein von poly- oder difunktionellen Isocyanaten
und eine verbesserte Filmbildung aufweisen.

Erfindungsgemäß wird diese Aufgabe gelöst durch Haftvermittler mit einem Gehalt an chlorierten Polymeren, aromatischen Nitrosoverbindungen und gegebenenfalls weiteren
Harzen, Füllstoffen sowie Hilfs- und Lösungsmitteln,
welche dadurch gekennzeichnet sind, daß sie N,N'-m-
Phenylendimaleinimid in einer Menge von 1 bis 15, insbesondere 2 bis 8 Gewichtsprozent enthalten. Eine bevorzugte
günstige Mischung besteht aus folgenden Bestandteilen:

| | |
|---|---|
| Phenylendimaleinimid | 2 bis 8 Gewichtsprozent |
| Chlorsulfoniertes Polyethylen | 2 bis 15 Gewichtsprozent |
| Chlorierter Naturkautschuk | 2 bis 10 Gewichtsprozent |
| Phenolharz (Novolak) | 1 bis 10 Gewichtsprozent |
| aromatische Dinitrosoverbindung | 2 bis 10 Gewichtsprozent |
| Füllstoffe | 2 bis 15 Gewichtsprozent |
| Lösungsmittel | 32 bis 89 Gewichtsprozent |

Bei N,N'-m-Phenylendimaleinimid handelt es sich um eine
bekannte Substanz, die bei peroxidischer Vernetzung
von Polychloropren oder EPDM-Kautschuk eingesetzt wird.
Als Binde- oder Klebmittel allein oder mit anderen
Komponenten wurde sie bisher nicht eingesetzt.

...

Chlorsulfonierte Ethylenpolymere sind Stoffe, die als solche als Klebmittel nicht brauchbar sind.

Sie enthalten im allgemeinen etwa 10 bis etwa 60 % (vorzugsweise 15 bis 45 %) Chlor und etwa 0,1 bis etwa 5 % (vorzugsweise 0,2 bis 2,5 %) Schwefel. Chlorsulfonierte Ethylenpolymere sind im Handel in verschiedenen Sorten erhältlich, die sich zum Beispiel bezüglich Dichte und Molekulargewicht voneinander unterscheiden. Sie können je für sich allein oder in Mischung verwendet werden. Im allgemeinen sind solche Sorten mit mehr als 20 Kohlenstoffatomen und Molekulargewichten über 1000 geeignet.

Chlorkautschuk ist eine seit langem bekannte durch Chlorierung aus Naturkautschuk erhältliche feste Masse (Chlorgehalt etwa 62 bis 66 Gewichtsprozent), die auf verschiedensten technischen Sachgebieten verwendet werden kann.

Zur Herstellung der erfindungsgemäßen Bindemittel eignen sich die in organischen Lösungsmitteln wie Ethanol und Toluol löslichen nicht mehr reaktiven Phenolharze vom Novolaktyp. Als Hilfsstoffe können in untergeordneter Menge auch andere vernetzbare Vorkondensate aus Phenolen oder Melamin und Formaldehyd mitverwendet werden. Im allgemeinen wird durch diese Zusätze die Beständigkeit der Verbindungen zwischen Metall und Substrat hinsichtlich hydrolytischer Einflüsse erhöht. Dies gilt insbesondere für den Zusatz von Novolak.

...

0051798
HENKEL KGaA
ZR-FE/Patente

Schließlich ist ein weiterer wesentlicher Bestandteil eine in Haftmitteln für Kautschuk häufig eingesetzte aromatische Nitrosoverbindung. Unter den zahlreichen bekannten Nitrosoverbindungen, insbesondere den Dinitrosoverbindungen ist aus praktischen Gründen das p-Dinitrosobenzol bevorzugt.

Als bevorzugte Füllstoffe, die sich aktiv im Bindemittel verhalten, sind geeignet feingemahlene Phosphate, dibasisches Bleiphosphit, Zinkoxid, Siliciumdioxid, Titandioxid, Bleioxid, Eisenoxid, Chromoxid und die verschiedenen Rußtypen. Bei letzteren verwendet man zweckmäßig die in der Kautschukindustrie üblichen Sorten. Unter Umständen kann es auch von Vorteil sein, noch zusätzliche Klebrigmacher wie chlorierte, aliphatische oder aromatische Kohlenwasserstoffe, Kondensatharze vom Resorzintyp oder Cumaron-Indenharze oder Terpenharze mitzuverwenden.

Zur Herstellung der Haftvermittler beziehungsweise Bindemittel werden die einzelnen Komponenten zunächst in einem Lösungsmittel gelöst oder suspendiert. Bevorzugte

. . .

0051798
HENKEL KGaA
ZR-FE/Patente

Lösungsmittel sind aromatische Kohlenwasserstoffe wie Xylol oder Toluol oder chlorierte Kohlenwasserstoffe wie Trichlorethylen, Perchlorethylen, Chlorbenzol oder Ketone oder Ester wie Methylethylketon, Diethylketon, Ethylacetat, Ethylenglykoldiacetat, der Ethylether des Ethylenglykolmonoacetats, Butylacetat und andere mehr. Die Menge des eingesetzten Lösungsmittels kann über einen ziemlichen Bereich variieren. Im allgemeinen wird man aber so viel Lösungsmittel verwenden, daß der Haftvermittler beziehungsweise das Bindemittel einen Feststoffgehalt von 11 bis etwa 60 Gewichtsprozent aufweist.

Der Bindemittelauftrag erfolgt durch Streichen, Tauchen oder Spritzen auf die entsprechend vorbehandelten Unterlagen. Vor dem Auftrag entfernt man zweckmäßig vorher mechanische Verunreinigungen durch Strahlen mit Sand oder Hartgußkies. Im allgemeinen ist es notwendig weiterhin ein Entfetten durch Lösungsmittel vorzunehmen. Zum Entfetten kann vorteilhaft Trichlorethylendampf verwendet werden. Soll die Kautschukmischung auf eine nichtmetallische Unterlage aufvulkanisiert werden, wie beispielsweise eine mit Kunstharz wie Phenol- oder Melaminharz getränkte Schicht oder einen anderen Kunststoff, so erfolgt zweckmäßig ein Aufrauhen beziehungsweise ein Entfernen von fettigen oder sonstigen Verunreinigungen durch Behandlung mit geeigneten organischen Lösungsmitteln. Nach dem Auftragen des Bindemittels beziehungsweise des Haftvermittlers läßt man das verwendete Lösungsmittel abdunsten. Die so beschichteten Metalle beziehungsweise Unterlagen sind mehrere Tage lagerfähig, ohne ihre Fähigkeit zu verlieren festhaftende Gummimetallverbindungen einzugehen.

...

Die eigentliche Bindung zwischen dem Kautschuk und dem Substrat erfolgt unter der für die eingesetzte Kautschukmischung notwendigen Temperatur bei einem leicht erhöhten Druck. Im allgemeinen liegt die Temperatur zwischen 120 und 220° C und die Dauer der Vulkanisation zwischen etwa 5 Minuten und 1 Stunde.

Vorteilhafterweise kann das erfindungsgemäße Verfahren unter Verwendung der beschriebenen erfindungsgemäßen Haftvermittler beziehungsweise Bindemittel zum Aufvulkanisieren von Kautschukmischungen auf Basis von Styrolbutadienkautschuk, Nitrilkautschuk, Polychloropren, Naturkautschuk und Butylkautschuk auf Metallunterlagen eingesetzt werden. Außerdem kann es auch bei sogenannten stabilen Substraten angewandt werden, das heißt solchen, die unter Vulkanisationsbedingungen beständig sind.

Die erhaltenen Bindungen zeichnen sich durch eine hohe Haftfestigkeit und hohe Beständigkeit gegen korrosive Medien und gegen technische Öle und Fette aus. Die mittels des erfindungsgemäßen Verfahrens hergestellten Verbundkörper können auf den verschiedensten technischen Gebieten verwendet werden, so insbesondere in der Automobilindustrie als elastische Lager, Kupplungen, Stoßdämpfer und Dichtungen, im Apparatebau für den Bau chemischer Anlagen oder auf dem Bausektor.

## Beispiele

In den nachfolgenden Beispielen wurden die nachstehend mit A, B, C, D und E bezeichneten Kautschukmischungen auf Substrate aufvulkanisiert. Nachstehend werden die Zusammensetzungen der Mischungen sowie die Vulkanisationsbedingungen angegeben.

### Mischung A

| 100 | Gewichtsteile | Naturkautschuk |
| 10 | Gewichtsteile | Zinkoxid |
| 2 | Gewichtsteile | Stearinsäure |
| 1 | Gewichtsteil | Phenyl-ß-naphthylamin |
| 2 | Gewichtsteile | Fichtenteer |
| 25 | Gewichtsteile | EPC-Ruß |
| 0,33 | Gewichtsteile | Zinkdimethyldithiocarbamat |
| 0,58 | Gewichtsteile | Dibenzothiazyldisulfid |
| 2,75 | Gewichtsteile | Schwefel |

Vulkanisationsbedingungen: 10 Minuten bei 153° C.

### Mischung B

| 100 | Gewichtsteile | Styrolbutadienkautschuk |
| 5 | Gewichtsteile | Zinkoxid |
| 1 | Gewichtsteil | Stearinsäure |
| 50 | Gewichtsteile | HAF-Ruß |
| 8 | Gewichtsteile | gesättigte polymere Erdölkohlen-wasserstoffe |
| 1,25 | Gewichtsteile | N-Cyclohexyl-2-benzthiazylsulfenamid, |
| 1,75 | Gewichtsteile | Schwefel |

Vulkanisationsbedingungen: 30 Minuten bei 153° C.

...

**Mischung C**

| | |
|---|---|
| 100 | Gewichtsteile Polychloroprenkautschuk |
| 4 | Gewichtsteile Magnesiumoxid |
| 5 | Gewichtsteile Zinkoxid |
| 2 | Gewichtsteile Phenyl-ß-naphthylamin |
| 80 | Gewichtsteile MT-Ruß |
| 1 | Gewichtsteil Gemisch hochsiedender Kohlenwasserstoffe (Siedepunkt oberhalb 300° C) |
| 5 | Gewichtsteile naphthenisches Öl |
| 0,5 | Gewichtsteile Tetramethylthiurammonosulfid |
| 0,5 | Gewichtsteile Di-o-toluylguanidin |
| 0,5 | Gewichtsteile Ethylenthioharnstoff |
| 1 | Gewichtsteil Schwefel |

Vulkanisationsbedingungen: 30 Minuten bei 153° C.

**Mischung D**

| | |
|---|---|
| 100 | Gewichtsteile Nitrilkautschuk (42 % Acrylnitrilgehalt) |
| 5 | Gewichtsteile Zinkoxid |
| 1 | Gewichtsteil Stearinsäure |
| 65 | Gewichtsteile SRF-Ruß |
| 10 | Gewichtsteile Terpenharz |
| 10 | Gewichtsteile Dibutylphthalat |
| 0,31 | Gewichtsteile Tetramethylthiurammonosulfid |
| 1 | Gewichtsteil Schwefel |

Vulkanisationsbedingungen: 25 Minuten bei 153° C.

**Mischung E**

| | |
|---|---|
| 100 | Gewichtsteile Butylkautschuk |
| 5 | Gewichtsteile Zinkoxid |
| 1 | Gewichtsteil Stearinsäure |
| 50 | Gewichtsteile HAF-Ruß |
| 1 | Gewichtsteil Dibenzothiazyldisulfid |
| 1,5 | Gewichtsteile Tellurdiethyldithiocarbamat |
| 1 | Gewichtsteil Schwefel |

Vulkanisationsbedingungen: 30 Minuten bei 160°C.

...

Mischung F

| 100 | Gewichtsteile | Ethylen-Propylen-Ethylidennorbornen-Kautschuk (Molverhältnis 60:38:2) |
| 1 | Gewichtsteil | ß-Naphthylamin |
| 5 | Gewichtsteile | Zinkoxid |
| 1 | Gewichtsteil | Stearinsäure |
| 75 | Gewichtsteile | FEF-Ruß |
| 10 | Gewichtsteile | hochsiedender Kohlenwasserstoff (Siedepunkt oberhalb 300° C) |
| 1,0 | Gewichtsteil | Dipentamethylthiuramtetrasulfid |
| 1,0 | Gewichtsteil | Zn-ethylphenyldithiocarbamat |
| 0,8 | Gewichtsteile | Zn-mercaptobenzthiazol |
| 2 | Gewichtsteile | Schwefel (gemahlen) |

Vulkanisationsbedingungen: 30 Minuten bei 153° C

Die Bindeprüfungen wurden nach ASTM-D 429, Methode B, durchgeführt. Für die Witterungsbeständigkeitsprüfung wurde der sogenannte Kochendwassertest (K.W.T.) gewählt. Im Kochendwassertest wurden o.g. Schälprüfkörper im heißen Wasser bei 95° C durch Anhängen eines Gewichtes von 2 kg 2 Stunden lang belastet, wobei die Bindenaht beansprucht wurde. Anschließend wurden die Verbundkörper zerrissen (abgeschält) und das Reißbild beurteilt.

R bedeutet Bruch im Elastomeren, wobei die davorstehende Zahl angibt, zu welchem Prozentsatz das Zerreißen in der Elastomerphase eintrat. M. bedeutet, daß das Bindemittel sich vom Metall gelöst hat. RC bedeutet Trennung zwischen Kautschuk und Bindemittel.

...

## Beispiel 1

Es wurde ein Gemisch aus 5 % chlorsulfoniertem
Polyethylen (1,7 % S; 1,85 % Cl),2 % chloriertem Naturkautschuk, 6 % p-Dinitrosobenzol, 2 % Phenylendimaleinimid,
2 % Ruß, 2 % Novolak, 6 % dibasisches Bleiphosphit, 32 %
Trichlorethylen und 43 % Xylol hergestellt.

Metallbleche aus kaltgewalztem Stahl wurden mit Hartgußkies gestrahlt, vor und nach dem Strahlen in Trichlorethylendampf entfettet und mit dem oben genannten
Haftvermittler beschichtet. Nach dem Trocknen wurden
die Bleche gemäß ASTM-D 429, Methode B, im Rahmen einer
Vulkanisation in der Presse, je nach Vulkanisationsbedingung an Kautschukmischungen A, B, C, D, E und F
gebunden. Die Gummiauflage betrug circa 5 mm. Nach der
Lagerung der Prüfkörper von 24 Stunden bei Raumtemperatur wurde der Gummibelag im Winkel von 45° abgeschält.
Bestimmt wurde die Schälfestigkeit und das Reißbild
entsprechend der Norm. Auf gleiche Weise hergestellte
Prüfkörper wurden dem Kochendwassertest (K.W.T.) unterzogen. Die Ergebnisse sind in der nachstehenden Tabelle
1 zusammengefaßt.

### Tabelle 1

| Mischung | Schälfestigkeit daN/2,5 cm | Reißbild | KWT Reißbild |
|---|---|---|---|
| A | 31 | 100 R | 100 R |
| B | 71 | 100 R | 100 R |
| C | 42 | 100 R | 100 R |
| D | 38 | 100 R | 100 R |
| E | 34 | 100 R | 90 R-10 RC[+)] |
| F | 42 | 100 R | 100 R |

. . .

+)  90 R   =   90 % der Bindefläche Bruch im Gummi

     10 RC  = .  10 % der Bindefläche Trennung zwischen
               Bindemittel und Gummi

Die Schälprüfung vor dem Kochendwassertest ergab bei
allen Mischungen einen völligen Bruch im Elastomeren.
Die Ergebnisse nach dem Kochendwassertest waren bis
auf die IIR-Mischung einwandfrei.

Beispiel 2

Mit dem in dem Beispiel 1 beschriebenen Bindemittel
wurden Prüfkörper gemäß ASTM-D 429, Methode A,
(planparallele Rundpuffer) hergestellt. Als Kautschukmischungen wurden Mischung A und Mischung B eingesetzt.
Hierzu wurden die Metallteile vor und nach dem Strahlen
mit Hartgußkies in Trichlorethylendampf entfettet und
mit dem Haftvermittler beschichtet. Nach dem Trocknen
des Bindemittelfilmes wurden die Metallteile in der
Presse, je  nach Vulkanisationsbedingung, an die Kautschukmischungen A und B gebunden. Nach der Lagerung von
circa 16 Stunden bei Raumtemperatur wurde ein Teil
der Prüfkörper zerrissen und der andere Teil 40 Std.
im kochenden Wasser gelagert und danach zerrissen.
Die Ergebnisse sind in der nachfolgenden Tabelle 2
aufgeführt.

Tabelle 2

| Mischung | Zugfestigkeit | | Wassertest | |
| | MPa | Reißbild | MPa | Reißbild (40 h bei 90°C - 95° C |
|---|---|---|---|---|
| A | 7,7 | 90 R-10 RC | 7,2 | 80 R-20 RC |
| B | 9,2 | 100 R | 8,9 | 100 R |

0051798
HENKEL KGaA
ZR-FE/Patente

## Beispiel 3

Es wurde ein Gemisch aus 5 % chlorsulfoniertem Polyethylen (1,75 % S; 1,90 % Cl), 2 % chloriertem Naturkautschuk, 6 % p-Dinitrosobenzol, 2 % Phenylendimaleinmid, 6 % dibasischem Bleiphosphit, 2 % Ruß, 32 % Trichlorethylen und 45 % Xylol hergestellt.

Es wurden mit diesem Haftmittel Prüfkörper, wie im Beispiel 1 beschrieben, gemäß ASTM-D 429, Methode B, hergestellt.

Die Schälfestigkeitsprüfung erfolgte vor und nach dem Kochendwassertest (K.W.T.). Die Ergebnisse sind in der nachstehenden Tabelle 3 zusammengefaßt.

### Tabelle 3

| Mischung | Schälfestigkeit DaN/2,5 cm | Reißbild | KWT Reißbild |
|----------|------------|----------|--------------|
| A | 35 | 100 R | 100 R |
| B | 69 | 100 R | 100 R |
| C | 44 | 100 R | 100 R |
| D | 41 | 100 R | 100 R |
| E | 38 | 100 R | 70 R-30 RC |
| F | 36 | 100 R | 100 R |

...

## Beispiel 4

Mit dem im Beispiel 3 beschriebenen Bindemittel wurden
Prüfkörper (planparallele Rundpuffer) gemäß ASTM-D 429,
Methode A, hergestellt (siehe Beispiel 2).

Ein Teil der Prüfkörper wurde nach einer Lagerung von
circa 16 Stunden bei Raumtemperatur zerrissen und der
andere Teil nach einer Lagerung im kochenden Wasser nach
40 Stunden zerrissen. Die Ergebnisse sind in der nachstehenden Tabelle 4 zusammengefaßt.

## Tabelle 4

| Mischung | Zugfestigkeit MPa | Reißbild | Wassertest MPa | Reißbild (40 h bei $90^\circ$C-$95^\circ$ C) |
|---|---|---|---|---|
| A | 7,2 | 80 R - 20 M[+] | 6,9 | 40 R - 70 M |
| B | 9,8 | 90 R - 10 M | 8,9 | 50 R - 50 M |

[+] 80 R = 80 % der Bindefläche Bruch im Gummi
20 M = 20 % der Bindefläche Trennung zwischen
Bindemittel und Gummi

## Patentansprüche

1) Unter Vulkanisationsbedingungen wirksame Bindemittel
für Natur- und Synthesekautschuk mit einem Gehalt an
chlorierten Polymeren, aromatischen Nitrosoverbindungen und gegebenenfalls weiteren Harzen, Füllstoffen
sowie Hilfs- und Lösungsmitteln, gekennzeichnet
durch einen zusätzlichen Gehalt an N,N'-m-Phenylendimaleinimid in einer Menge von 1 bis 15, insbesondere
2 bis 8 Gewichtsprozent.

2) Bindemittel für Synthese- und Naturkautschuk
nach Anspruch 1, dadurch gekennzeichnet, daß sie
bestehen aus 1 bis 15, insbesondere 2 bis 8 Gewichtsprozent N,N'-m-Phenylendimaleinimid, 2 bis 15 Gewichtsprozent chlorsulfoniertem Polyethylen, 2 bis 10
Gewichtsprozent chloriertem Naturkautschuk, 1 bis
10 Gewichtsprozent eines nicht reaktionsfähigen
Phenolharzes (Novolak), 2 bis 15 Gewichtsprozent
Füllstoff sowie 40 bis 89 Gewichtsprozent an Lösungsmitteln.

Europäisches Patentamt

**EUROPÄISCHER RECHERCHENBERICHT**

0051798
Nummer der Anmeldung
EP 81 10 9076

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 4 119 587 (JAZENSKI et al.) | | C 09 J 3/12<br>C 09 J 3/14 |
| X | * Anspruch 21; Beispiele 1-4; Spalte 2, Zeilen 40-43; Spalte 6; | 1 | |
| Y | Zeilen 26-30 *<br>--- | 2 | |
| Y | FR - A - 2 156 794 (ANCHOR CHEM. COMP.) | | |
| | * Ansprüche 5,7,12,13; Seite 2, Zeilen 30,31 * | 2 | |
| | & DE - A - 2 251 318<br>--- | | **RECHERCHIERTE SACHGEBIETE (Int. Cl.³)** |
| Y | DE - A - 2 532 816 (HENKEL) | | C 09 J 3/12<br>C 09 J 3/14 |
| | * Seite 3, Zeilen 10-15, 18,19 *<br>--- | 2 | |
| A | GB - A - 873 358 (BORG-WARNER) | | |
| | * Ansprüche 1 und 7 * | | |
| | ---------- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12.02.1982 | VAN HUMBEECK |

EPA form 1503.1   06.78